# EUROPÄISCHE PATENTSCHRIFT

(11) **EP 0 876 269 B1**
(45) Veröffentlichungstag und Bekanntmachung des Hinweises auf die Patenterteilung: **24.04.2002**
(21) Anmeldenummer: 97951899.0
(22) Anmeldetag: 13.11.1997
(51) Int. Cl.: B60R 22/46

(54) **ANTRIEBSVORRICHTUNG FÜR EIN INSASSEN-RÜCKHALTESYSTEM**
DRIVING DEVICE FOR A PASSENGER RESTRAINT SYSTEM
DISPOSITIF D'ENTRAINEMENT POUR UN SYSTEME DE RETENUE DE PASSAGERS

(30) Priorität: 14.11.1996 DE 29619838 U
(43) Veröffentlichungstag der Anmeldung: 11.11.1998
(73) Patentinhaber: FÖHL, Artur, 73614 Schorndorf (DE)
(72) Erfinder: FÖHL, Artur, 73614 Schorndorf (DE)
(74) Vertreter: Degwert, Hartmut, Dipl.-Phys.
(86) Internationale Anmeldenummer: EP9706350
(87) Internationale Veröffentlichungsnummer: WO9821075

(56) Entgegenhaltungen:
- EP-A- 0 581 288
- US-A- 3 982 775
- US-A- 4 232 886

## Beschreibung

Die Erfindung betrifft eine Antriebsvorrichtung für ein Insassen-Rückhaltesystem, insbesondere Gurtstraffer, mit einem aus mehreren Teilen zusammengefügten Gehäuse, in dem eine Arbeitskammer sowie ein mit dieser in Verbindung stehender Aufnahmeraum für eine pyrotechnische Treibladung gebildet sind.

Derartige Antriebsvorrichtungen sind in zahlreichen Ausführungen bekannt. Man unterscheidet generell zwischen Drehantrieben und Linearantrieben. Bei beiden Ausführungen besteht das Gehäuse gewöhnlich aus einem Hauptkörper und einer auf eine offene Seite dieses Hauptkörpers aufgesetzten Deckelplatte. Bei einem Drehantrieb ist im Inneren des Gehäuses ein Rotor angeordnet, beispielsweise ein Lamellen-Rotor oder Drehkolben-Rotor. Bei Linearantrieben ist im Gehäuse ein Zylinder gehaltert, worin ein Kolben verschiebbar aufgenommen ist. Die Arbeitskammer ist in beiden Fällen zwischen den aneinandergefügten Gehäuseteilen gebildet. In die Arbeitskammer mündet der im allgemeinen zylindrische Aufnahmeraum für eine pyrotechnische Gasgenerator-Kapsel. Die Gehäuseteile sind durch eine größere Anzahl von Schrauben oder Nieten gegeneinandergespannt. Bei der Aktivierung der Treibladung in der Gasgenerator-Kapsel entsteht in dem Aufnahmeraum des Gehäuses kurzzeitig ein extrem hoher Druck, der 400 bis 500 Bar oder mehr erreichen kann.

Die Erfindung beruht auf der Erkenntnis, daß kurzzeitig nach Aktivierung des Gasgenerators aufgrund des extrem hohen Drucks im Aufnahmeraum des Gehäuses Leckverluste auftreten, die ein unkontrolliertes Überströmen der Druckgase in den Arbeitsraum zur Folge haben. Unter der hohen Druckbelastung bildet sich durch Dehnung der Schrauben oder Bolzen ein Spalt, durch den weitere Leckverluste auftreten. Wenn zwischen dem Aufnahmeraum im Gehäuse und dem Arbeitsraum eine Vorkammer gebildet ist, besteht die Möglichkeit, durch Bemessung des Einmündungsquerschnitts in den Arbeitsraum den zeitlichen Druckverlauf zu beeinflussen und an die konstruktiven Gegebenheiten des Arbeitskolbens anzupassen. Bei reduziertem Einmündungsquerschnitt in den Arbeitsraum herrscht kurzzeitig nach Aktivierung des Gasgenerators ein wesentlich niedrigerer Druck im Arbeitsraum als in der Vorkammer. Der hohe Druck im Aufnahmeraum und in der Vorkammer verstärkt die Tendenz zu Leckverlusten.

Durch die Erfindung wird dem Auftreten von Leckverlusten im Bereich des Aufnahmeraumes und der gegebenenfalls vorhandenen Vorkammer wirksam vorgebeugt. Gemäß der Erfindung ist eine die Treibladung umgebende Hülse vorgesehen, die zwischen den Teilen des Gehäuses abdichtend in dessen Aufnahmeraum eingesetzt ist. Die Hülse bildet eine Abdichtung entlang der Innenfläche des Aufnahmeraumes, wo sie insbesondere an der Trennfuge zwischen den Gehäuseteilen abdichtet. Die von der Treibladung freigesetzten Druckgase werden entlang der Innenfläche der Hülse zur Arbeitskammer geleitet. Bei der bevorzugten Anwendung der Erfindung auf einen Drehantrieb mit Lamellen-Rotor wurde eine überraschende Steigerung der Leistung erzielt. Diese ist zum einen auf die Vermeidung von Leckverlusten unmittelbar nach Aktivierung der Treibladung und zum anderen auf die zusätzlichen Gestaltungsmöglichkeiten zurückzuführen, welche die Hülse eröffnet. Schon die Erkenntnis, daß sich zwischen den zwei miteinander verspannten Gehäuseteilen im Moment der Aktivierung des Gasgenerators ein Spalt bilden kann, durch den Druckgas austritt, läßt sich mit üblichen Überlegungen oder Untersuchungen nicht gewinnen. Der-gesamte Antriebsvorgang ab der Aktivierung des Gasgenerators bis zur Vollendung der Gurtstraffung dauert nur wenige Millisekunden, so daß Untersuchungen zur Leckage kaum möglich sind. Wenn die Hülse axial über die Länge einer die Treibladung aufnehmenden Gasgenerator-Kapsel hinaus verlängert wird, kann sie auch zur Gestaltung einer der Arbeitskammer vorgelagerten Vorkammer herangezogen werden, um den zeitlichen Verlauf des Gasdrucks zu beeinflussen und an die Erfordernisse der Antriebsvorrichtung anzupassen.

Vorzugsweise sind die Werkstoffe und Wandstärken der Hülse und der Gasgenerator-Kapsel so beschaffen, daß durch den radialen Dehnungsdruck der Gasgenerator-Kapsel bei deren Aktivierung einerseits und durch die Abstützung der Hülse in dem Aufnahmeraum des Gehäuses andererseits die Abdichtung zwischen der Gasgenerator-Kapsel und der Hülse gefördert wird. Zugleich wird die Hülse an die Wandung des Aufnahmeraumes im Gehäuse angepreßt, wodurch auch dort die Dichtwirkung gesteigert wird.

Die Bestandteile des Gehäuses, ein Hauptkörper und eine Deckelplatte, werden vorzugsweise als Formteile, beispielsweise aus Leichtmetall-Druckguß, hergestellt, um eine rationelle Serienfertigung zu ermöglichen. Der Aufnahmeraum für die Treibladung wird durch zwei einander gegenüberliegende Aussparungen in dem Hauptkörper und der Deckelplatte gebildet. Um das Ausformen der Formteile zu erleichtern, laufen diese Aussparungen an der Trennebene zwischen Hauptkörper und Deckelplatte unter einem stumpfen Winkel aus. Die Hülse wird vorzugsweise mit zwei achsparallelen Rippen ausgebildet, die an die Trennebene zwischen Hauptkörper und Deckelplatte angrenzen und die mit der Hülse erzielte Dichtwirkung verbessern, besonders bei Verwendung eines geeigneten Kunststoffs als Material für die Hülse.

Weitere Merkmale und Vorteile der Erfindung ergeben sich aus der folgenden Beschreibung und aus der Zeichnung, auf die Bezug genommen wird. In der Zeichnung zeigen:
Fig. 1 eine Draufsicht auf den Hauptkörper eines Gehäuses einer Antriebsvorrichtung bei abgenommener Deckelplatte;
Fig. 2 einen Querschnitt der Antriebsvorrichtung nach Fig. 1 bei aufgesetzter Deckelplatte;
Fig. 3 einen Teilschnitt einer Ausführungsvariante;
Fig. 4 eine auseinandergezogene Perspektivansicht der in den Figuren 1 und 2 gezeigten Ausführungsform;
Fig. 5 eine schematische Schnittansicht einer Ausführungsform der Antriebsvorrichtung mit Kolben/Zylinder-Linearantrieb;
Fig. 6, 7 und 8 drei Ausführungsvarianten einer eine Kapsel umschließenden Hülse;
Fig. 9 einen Querschnitt einer Ausführungsform mit einem aus Formteilen bestehenden Gehäuse;
Fig. 10 einen Schnitt entlang Linie X-X in Fig. 9;
Fig. 11 eine Perspektivansicht einer Hülse mit einer darin eingesetzten Gasgenerator-Kapsel;
Fig. 12 eine Ausführungsvariante mit einem unmittelbar in eine Hülse eingebrachten Treibsatz; und
Fig. 13 eine aus einer Hülse, einem Treibmittel, einem Zünder und einer Austrittsdüse versehenen Baugruppe.

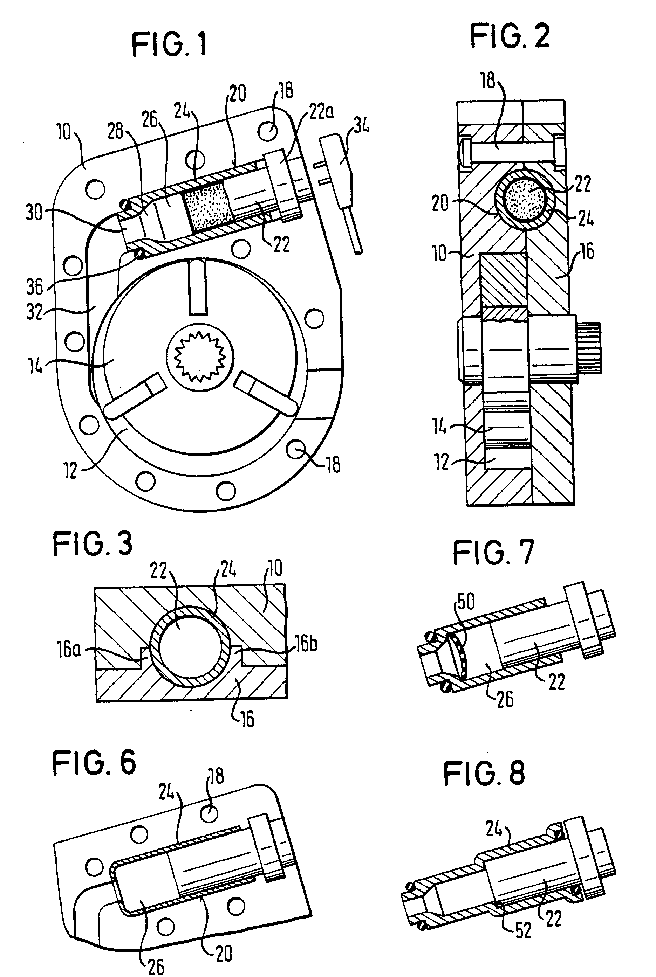

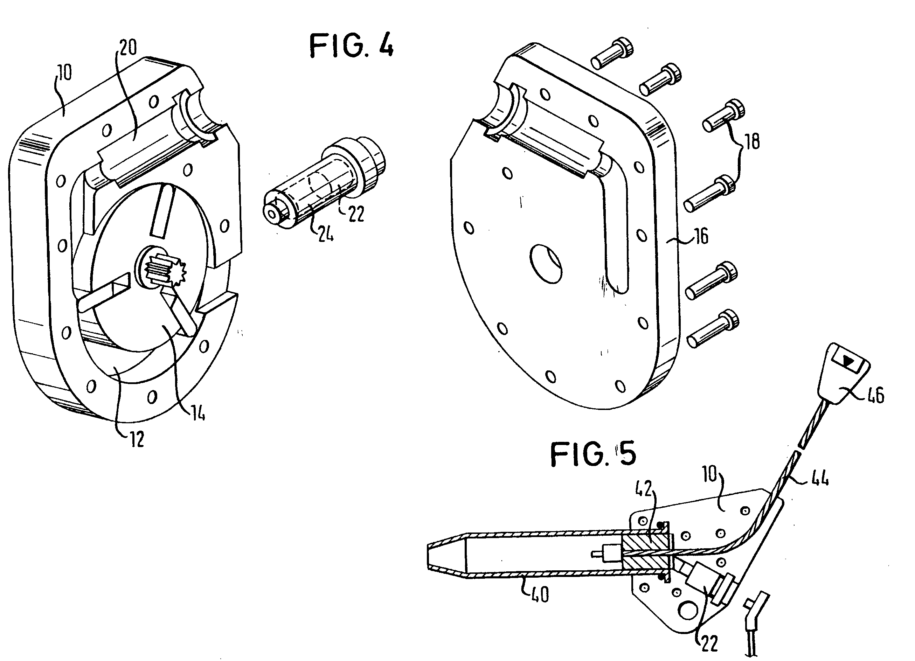

Bei der in den Figuren 1 bis 4 gezeigten Ausführungsform einer Antriebsvorrichtung für einen Gurtstraffer handelt es sich um einen Drehantrieb mit Lamellen-Rotor. Die Antriebsvorrichtung besitzt ein zweiteiliges Gehäuse, dessen Hauptkörper 10 einen flachen Boden sowie eine von diesem abragende Umfangswand aufweist, die eine Rotorkammer 12 umgibt, worin ein Lamellen-Rotor 14 aufgenommen ist. Die offene Seite des Hauptkörpers 10 wird durch eine Deckelplatte 16 verschlossen. Die Deckelplatte 16 ist mit dem Hauptkörper 10 durch eine größere Anzahl von Schraubbolzen oder Nieten 18 verspannt. In dem Hauptkörper 10 ist die eine Hälfte eines zylindrischen Aufnahmeraumes 20 ausgespart; die andere Hälfte dieses Aufnahmeraumes 20 ist entsprechend aus der Deckelplatte 16 ausgespart. In den Aufnahmeraum 20 ist eine pyrotechnische Gasgenerator-Kapsel 22 eingesetzt, die von einer zylindrischen Hülse 24 umgeben ist. Diese Hülse 24 ist über das axiale Ende der Gasgenerator-Kapsel 22 hinaus verlängert und bildet dort eine Vorkammer 26, die über eine Querschnittsverengung 28 und eine Düse 30 in eine der Rotorkammer 12 vorgelagerte Arbeitskammer 32 mündet.

Die Gasgenerator-Kapsel 22 weist ein dünnwandiges Becherteil auf, mit einem Ringbund 22a am äußeren Ende zur axialen Festlegung in einer entsprechenden Erweiterung des Aufnahmeraumes 20. In Fig. 1 ist ein elektrischer Anschlußstecker 34 zum Anschließen an einen elektrischen Zünder der Gasgenerator-Kapsel 22 gezeigt. Eine mechanische Auslösung mittels Schlagzünder ist ebenfalls möglich.

Die Hülse 24 kann bei geeigneter Materialwahl und Dimensionierung von ausreichender Festigkeit sein, um dem von der Gasgenerator-Kapsel bei deren Aktivierung ausgehenden Dehnungsdruck standzuhalten. Sie kann aber auch aus einem relativ weichen Material wie Aluminium bestehen. Zur Verbesserung ihrer Abdichtung am inneren axialen Ende ist zusätzlich eine Ringdichtung 36 vorgesehen, die in eine Ringnut am Außenumfang der Hülse 24 eingesetzt ist und an der Innenfläche des Aufnahmeraumes anliegt.

Einzelheiten des Drehantriebes sind für die Erfindung ohne Belang und werden daher hier nicht beschrieben.

Wie aus Fig. 2 ersichtlich ist, liegt die Achse der zylindrischen Gasgenerator-Kapsel 22 in der Trennebene zwischen dem Hauptkörper 10 und der Deckelplatte 16. Bei Aktivierung der Gasgenerator-Kapsel 22 wird deren Boden aufgesprengt, da die zylindrische Seitenwand über die Hülse 24 an der Innenfläche des Aufnahmeraumes 20 abgestützt ist. In der Vorkammer 26 entsteht nun kurzzeitig ein extrem hoher Druck von mehreren hundert Bar. Durch die radiale Komponente des Dehnungdrucks wird die Wandung der Gasgenerator-Kapsel 22 gegen die Innenseite der Hülse 24 und diese gegen die Innenfläche des Aufnahmeraumes 20 gepreßt. Zwischen den so aufeinanderliegenden Flächen wird eine gute Abdichtung erzielt, so daß Leckströmungen und ein unkontrolliertes Abströmen des Druckgases zur Arbeitskammer 32 verhindert werden. Der zeitliche Verlauf des Gasdrucks kann durch Gestaltung der Vorkammer 26 mit ihrer Querschnittsverengung 28 und der Düse 30 beeinflußt werden, um eine optimale Antriebsleistung zu erzielen.

Bei der in Fig. 3 gezeigten Ausführungsvariante liegt die Achse der Gasgenerator-Kapsel 22 parallel zu, aber im Abstand von der Trennebene zwischen Hauptkörper 10 und Gehäusedeckel 16. Der Gehäusedeckel 16 ist mit angeformten Wandungsteilen 16a, 16b versehen, die am Außenumfang der Hülse 24 anliegen und formschlüssig in entsprechende Ausnehmungen des Hauptkörpers 10 greifen. Die Wandungsteile 16a, 16b bilden einen Umweg für etwaige Leckströmungen, die so einen höheren Strömungswiderstand erfahren.

Bei der in Fig. 5 gezeigten Ausführungsform ist die Antriebsvorrichtung ein Linearstraffer mit einem Zylinder 40 und einem darin verschiebbar aufgenommenen Kolben 42, der über ein Zugseil 44 an einem Gurtschloß 46 angreift. Der Zylinder 40 ist mit seinem einen Ende an einem Gehäuse befestigt, das wie bei der zuvor beschriebenen Ausführungsform einen Hauptkörper 10 und eine (nicht gezeigte) Deckelplatte aufweist. In dem Hauptkörper 10 ist in gleicher Weise wie bei der zuvor beschriebenen Ausführungsform eine Gasgenerator-Kapsel 22 aufgenommen, die von einer Hülse umgeben und durch diese im Gehäuse abgedichtet ist. Die Abdichtung kann in gleicher Weise wie bei der zuvor beschriebenen Ausführungsform erfolgen, so daß auf eine Wiederholung der Beschreibung verzichtet wird.

Bei der Ausführungsform nach Fig. 6 ist die Hülse 24 ein relativ dünnwandiges Teil aus einem Material von minderer mechanischer Festigkeit. Im Bereich der Vorkammer 26 wird die Hülse 24 an der Innenfläche des Aufnahmeraumes 20 abgestützt. Insbesondere kann die Hülse 24 aus einem Kunststoff oder aus einem dünnwandigen Aluminium-Becher bestehen. Bei einer solchen Ausführungsform kann eine größere Anzahl von Schraubbolzen oder Nieten 18 erforderlich sein.

Bei der in Fig. 7 gezeigten Ausführungsform ist im Inneren der Vorkammer 26 ein Sieb 50 angeordnet, das ein Herausschleudern von Festteilchen der pyrotechnischen Ladung verhindert und auf diese Weise deren vollständige Verbrennung gewährleistet.

Bei der in Fig. 8 gezeigten Ausführungsform ist die Hülse 24 am inneren Ende der Gasgenerator-Kapsel 22 mit einem Anschlag versehen, der durch eine umlaufende Ringschulter 52 gebildet ist und eine axiale Abstützung am Umfangsrand des Bodens der Gasgenerator-Kapsel 22 bildet.

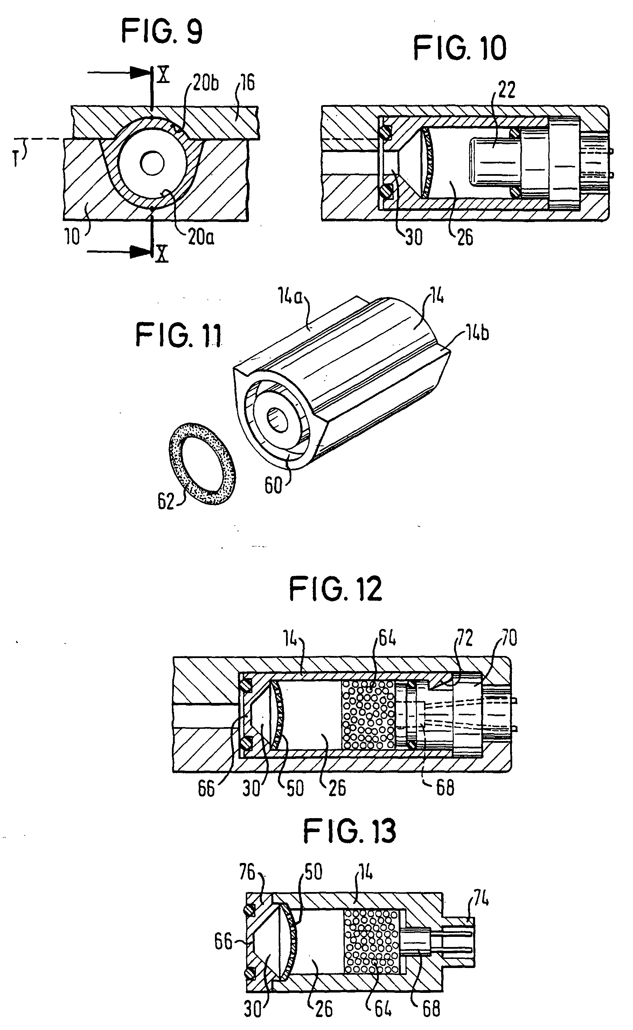

Bei der in den Figuren 9 bis 11 gezeigten Ausführungsform sind der Hauptkörper 10 und die Deckelplatte 16 als Formteile ausgebildet, insbesondere als Leichtmetall-Druckguß-Formteile. Der Aufnahmeraum für die Gasgenerator-Kapsel 22 und die Hülse 14 ist aus zwei einander gegenüberliegenden Aussparungen 20a im Hauptkörper 10 und 20b in der Deckelplatte 16 gebildet. Um das Ausformen der Formteile zu erleichtern, laufen die Aussparungen 20a und 20b jeweils in der Trennebene T - zwischen Hauptkörper 10 und Deckelplatte 16 unter einem stumpfen Winkel aus. Da die Aussparung 20a eine größere Tiefe als die Aussparung 20b aufweist, ergeben sich an der Trennebene T im Querschnitt annähernd dreieckförmige Räume für die Aufnahme von entsprechend geformten, achsparallelen Dichtrippen 14a, 14b der Hülse 14. An ihrem von der Gasgenerator-Kapsel 22 abgewandten Stirnende ist die Hülse 14 mit einer Ringnut 60 versehen, in die ein Dichtring 62 eingelegt ist.

Bei der in Fig. 12 gezeigten Ausführungsvariante ist das bei Bedarf in einer Hülle eingeschlossene Treibmittel 64 unmittelbar in die Hülse 14 eingesetzt. Die Austrittsdüse ist durch einen Berstboden 66 verschlossen. Auf der gegenüberliegenden Seite der Treibladung 64 ist ein Zünder 68 angeordnet, der von einem Sockel 70 getragen wird. Der Sockel 70 ist durch Rastmittel 72 in einer bestimmten Drehstellung in der Hülse 14 festgelegt. Wegen der unrunden Form der Hülse (Fig. 11) ergibt sich so eine definierte Drehstellung der elektrischen Steckkontakte am Sockel 70 relativ zum Gehäuse. Bei dieser Ausführungsform kann die Hülse 14 mit der Treibladung 6 und dem Zünder 68 als vorgefertigtes Bauteil ausgeführt werden. Durch den Berstboden 66 wird der Innenraum der Hülse 14 hermetisch abgeschlossen, so daß die Treibladung vor Umwelteinflüssen geschützt ist.

Bei der in Fig. 13 gezeigten Ausführungsvariante ist abweichend von der nach Fig. 12 der Zünder 68 in den Körper der Hülse 14 integriert. Auch ein Stecksockel 74 ist integraler Bestandteil der Hülse 14. Um die Einbringung der Treibladung 14 und des Zünders 68 zu ermöglichen, ist die Hülse 14 an einem axialen Ende offen und wird nach Einbringen des Treibmittels 64, des Zünders 68 und eines Siebbleches 50 durch eine Bodenplatte 76 verschlossen, in welcher die durch den Berstboden 66 verschlossene Austrittsdüse 30 gebildet ist. Diese Bodenplatte 76 kann mit der Hülse verklebt oder verschweißt werden.

## Patentansprüche

1. Antriebsvorrichtung für ein Insassen-Rückhaltesystem, insbesondere Gurtstraffer, mit einem aus mehreren Teilen (10, 16) zusammengefügten Gehäuse, in dem eine Arbeitskammer (32) sowie ein mit dieser in Verbindung stehender Aufnahmeraum (20) für eine pyrotechnische Treibladung (22) gebildet sind, **gekennzeichnet durch** eine die Treibladung umgebende Hülse (24), die zwischen den Teilen (10, 16) des Gehäuses abdichtend in dessen Aufnahmeraum (20) eingesetzt ist.

2. Antriebsvorrichtung nach Anspruch 1, **dadurch gekennzeichnet, daß** Werkstoff und Wandstärke der Hülse (24) so beschaffen sind, daß durch den radialen Dehnungsdruck der Treibladung bei deren Aktivierung einerseits und durch die Abstützung der Hülse (24) in dem Aufnahmeraum (20) des Gehäuses andererseits die Abdichtung zwischen der Hülse und der Innenfläche des Aufnahmeraumes gefördert wird.

3. Antriebsvorrichtung nach einem der vorstehenden Ansprüche, **dadurch gekennzeichnet, daß** die Hülse (24) an wenigstens einem ihrer axialen Enden mittels einer Dichtung (36) an der Innenfläche des Aufnahmeraumes (20) abgedichtet ist.

4. Antriebsvorrichtung nach einem der vorstehenden Ansprüche, **dadurch gekennzeichnet, daß** in der Hülse (24) gegenüber der Treibladung eine Vorkammer (26) gebildet ist.

5. Antriebsvorrichtung nach Anspruch 4, **dadurch gekennzeichnet, daß** die Vorkammer (26) an ihrem der Arbeitskammer (32) zugewandten Ende als Düse (30) ausgeformt ist.

6. Antriebsvorrichtung nach Anspruch 5, **dadurch gekennzeichnet, daß** in die Vorkammer (26) ein Sieb (50) eingesetzt ist.

7. Antriebsvorrichtung nach einem der vorstehenden Ansprüche, **dadurch gekennzeichnet, daß** das Gehäuse aus einem Hauptkörper (10) und einer auf eine offene Seite des Hauptkrpers entlang einer Trennebene aufgesetzten Deckelplatte (16) besteht und daß der Aufnahmeraum (20) teils aus dem Hauptkörper und teils aus der Deckelplatte ausgespart ist.

8. Antriebsvorrichtung nach Anspruch 7, **dadurch gekennzeichnet, daß** die Achse der zylindrischen Treibladung in der Trennebene zwischen Hauptkörper (10) und Deckelplatte (16) liegt.

9. Antriebsvorrichtung nach Anspruch 7, **dadurch gekennzeichnet, daß** die Achse der zylindrischen Treibladung parallel zur Trennebene zwischen Hauptkörper (10) und Deckelplatte (16) im Abstand von der Trennebene liegt und die Deckelplatte abragende Wandungsteile (16a, 16b) aufweist, die an der Treibladung anliegen und formschlüssig in entsprechende Ausnehmungen des Hauptkörpers (10) eingreifen.

10. Antriebsvorrichtung nach Anspruch 7, **dadurch gekennzeichnet, daß** der Hauptkörper (10) und die Deckelplatte (16) als Formteile ausgebildet sind und einander gegenüberliegende Aussparungen aufweisen, die den Aufnahmeraum (20) bilden und in der Trennebene unter einem stumpfen Winkel auslaufen.

11. Antriebsvorrichtung nach Anspruch 10, **dadurch gekennzeichnet, daß** die Hülse (24) zwei achsparallele Dichtrippen aufweist, die radial von der Mantelfläche der Hülse abstehen und am Übergang von der Trennebene zur Aussparung des Hauptkörpers (10) gebildet sind.

12. Antriebsvorrichtung nach Anspruch 7, **dadurch gekennzeichnet, daß** die Hülse (24) an ihrer inneren Stirnfläche eine Ringnut zur Aufnahme eines Dichtrings aufweist.

13. Antriebsvorrichtung nach einem der vorstehenden Ansprüche, **dadurch gekennzeichnet, daß** die Treibladung in einer von der Hülse (24) umschlossenen Kapsel (22) angeordnet ist.

14. Antriebsvorrichtung nach Anspruch 13, **dadurch gekennzeichnet, daß** der Umfangsrand am Boden der Kapsel (22) auf einem Anschlag an der Innenfläche der Hülse (24) abgestützt ist.

15. Antriebsvorrichtung nach einem der Ansprüche 1 bis 12, **dadurch gekennzeichnet, daß** die Treibladung (64) mit einem Zünder (68) in die Hülse (24) selbst eingesetzt ist.

16. Antriebsvorrichtung nach Anspruch 15, **dadurch gekennzeichnet, daß** Hülse (24) und Zünder (68, 70) mit Formschlußelementen (72) zur Lagefixierung des Zünders in der Hülse versehen sind.

17. Antriebsvorrichtung nach Anspruch 15 oder 16, **dadurch gekennzeichnet, daß** in der Hülse (24) gegenüber der Treibladung (64) eine Vorkammer (26) gebildet ist, die an ihrem von der Treibladung abgewandten Ende eine durch einen Berstboden (66) hermetisch verschlossene Austrittsdüse (30) aufweist.

## Claims

1. A driving arrangement for an occupant restraint system, in particular a belt tensioner, comprising a housing assembled of several parts (10, 16), in which housing a working chamber (32) is formed as well as an accommodation space (20) for a pyrotechnic propellant charge (22), the accommodation space being in communication with the working chamber, **characterized by** a sleeve (24) surrounding the propellant charge and being inserted between the parts (10, 16) of the housing in its accommodation space (20) to act as a seal.

2. The driving arrangement according to claim 1, **characterized in that** the material and the wall thickness of the sleeve (24) are of such a nature that the sealing contact between the sleeve and the inner surface of the accommodation space is enhanced on the one hand by the radial expansion pressure of the propellant charge, when activated, and on the other hand by the support provided for the sleeve (24) in the accommodation space (20) of the housing.

3. The driving arrangement according to any of the preceding claims, **characterized in that** on at least one of its axial ends the sleeve (24) is in sealing contact with the inner surface of the accommodation space (20) by means of a seal (36).

4. The driving arrangement according to any of the preceding claims, **characterized in that** a pre-chamber (26) is formed in the sleeve (24) opposite to the propellant charge.

5. The driving arrangement according to claim 4, **characterized in that** the pre-chamber (26) is shaped as a nozzle (30) at its end facing the working chamber (32).

6. The driving arrangement according to claim 5, **characterized in that** a sieve (50) is inserted in the pre-chamber (26).

7. The driving arrangement according to any of the preceding claims, **characterized in that** the housing consists of a main body (10) and a cover plate (16) placed on an open side of the main body along a parting plane, and that the accommodation space (20) is formed by spaces recessed partly in the main body and partly in the cover plate.

8. The driving arrangement according to claim 7, **characterized in that** the axis of the cylindrical propellant charge lies in the parting plane of the main body (10) and the cover plate (16).

9. The driving arrangement according to claim 7, **characterized in that** the axis of the cylindrical propellant charge lies spaced apart from and parallel to the parting plane of the main body (10) and the cover plate (16), and that the cover plate has projecting wall parts (16a, 16b) contacting the propellant charge and engaging corresponding recesses in the main body (10) with an interlocking fit.

10. The driving arrangement according to claim 7, **characterized by** the main body (10) and the cover plate (16) being configured as shaped parts and having recesses arranged opposite to each other, said recesses constituting the accommodation space (20) and running out in the parting plane at an obtuse angle.

11. The driving arrangement according to claim 10, **characterized in that** the sleeve (24) comprises two sealing ribs arranged parallel to the axis, the ribs projecting radially from the peripheral surface of the sleeve and being formed at the transition from the parting plane to the recess of the main body (10).

12. The driving arrangement according to claim 7, **characterized in that** the sleeve (24) comprises on its inner end face an annular groove for receiving a sealing ring.

13. The driving arrangement according to any of the preceding claims, **characterized in that** the propellant charge is arranged in a capsule (22) enclosed by the sleeve (24).

14. The driving arrangement according to claim 13, **characterized in that** the circumferential rim at the bottom of the capsule (22) is supported on a stop on the inner surface of the sleeve (24).

15. The driving arrangement according to any of the claims 1 to 12, **characterized in that** the propellant charge (64) is inserted in the sleeve (24) itself, together with an igniter (68).

16. The driving arrangement according to claim 15, **characterized in that** the sleeve (24) and the igniter (68, 70) are provided with interlocking elements (72) for fixing the igniter in its position in the sleeve.

17. The driving arrangement according to claim 15 or claim 16, **characterized in that** opposite to the propellant charge (64) a pre-chamber (26) is formed in the sleeve (24), the pre-chamber comprising on its end facing away from the propellant charge an outlet nozzle (30) which is hermetically sealed by a bursting base (66).

## Revendications

1. Dispositif d'entraînement pour un système de retenue de passagers, en particulier pour un tendeur de ceinture, comportant un boîtier assemblé à partir de plusieurs parties (10, 16), dans lequel sont formés une chambre de travail (32) ainsi qu'un réceptacle (20) en liaison avec celle-ci, pour une charge propulsive (22), **caractérisé par** une douille (24) entourant la charge propulsive, qui est insérée entre les parties (10, 16) du boîtier, de manière étanche dans son réceptacle (20).

2. Dispositif d'entraînement selon la revendication 1, **caractérisé en ce que** le matériau et l'épaisseur de paroi de la douille (24) sont tels que par la pression d'expansion radiale de la charge propulsive, l'étanchéité entre la douille et la surface interne du réceptacle est favorisée d'une part lors de l'activation de la charge propulsive, et d'autre part, par le soutien apporté à la douille (24) dans le réceptacle (20) du boîtier.

3. Dispositif d'entraînement selon l'une quelconque des revendications précédentes, **caractérisé en ce que** la douille (24) est étanchée à au moins une de ses extrémités axiales au moyen d'un joint (36) sur la surface interne du réceptacle (20).

4. Dispositif d'entraînement selon l'une quelconque des revendications précédentes, **caractérisé en ce qu'**une préchambre (26) est formée dans la douille (24) en vis-à-vis de la charge propulsive.

5. Dispositif d'entraînement selon la revendication 4, **caractérisé en ce que** la préchambre (26) est réalisée sous forme de tuyère (30) à son extrémité tournée vers la chambre de travail (32).

6. Dispositif d'entraînement selon la revendication 5, **caractérisé en ce qu'**un tamis (50) est inséré dans la préchambre (26).

7. Dispositif d'entraînement selon l'une quelconque des revendications précédentes, **caractérisé en ce que** le boîtier est constitué par un corps principal (10) et par une plaque de couvercle (16) posée sur une face ouverte du corps principal le long d'un plan de séparation et **en ce que** le réceptacle (20) est évidé partiellement à partir du corps principal et partiellement à partir de la plaque de couvercle.

8. Dispositif d'entraînement selon la revendication 7, **caractérisé en ce que** l'axe de la charge propulsive cylindrique est situé dans le plan de séparation entre le corps principal (10) et la plaque de couvercle (16).

9. Dispositif d'entraînement selon la revendication 7, **caractérisé en ce que** l'axe de la charge propulsive cylindrique est situé parallèlement au plan de séparation entre le corps principal (10) et la plaque de couvercle (16), à distance du plan de séparation, et la plaque de couvercle présente des parties de paroi (16a, 16b) en saillie qui sont appliquées contre la charge propulsive et s'engagent par engagement de formes dans des évidements correspondants du corps principal (10).

10. Dispositif d'entraînement selon la revendication 7, **caractérisé en ce que** le corps principal (10) et la plaque de couvercle (16) sont réalisés sous forme de pièces moulées et présentent des dégagements opposés les uns aux autres qui forment le réceptacle (20) et se terminent dans le plan de séparation sous un angle obtus.

11. Dispositif d'entraînement selon la revendication 10, **caractérisé en ce que** la douille (24) présente deux nervures d'étanchéité parallèles à l'axe, qui font saillie radialement depuis la surface enveloppe de la douille et qui sont formées à la transition entre le plan de séparation et le dégagement du corps principal (10).

12. Dispositif d'entraînement selon la revendication 7, **caractérisé en ce que** la douille (24) présente sur sa face frontale interne une gorge annulaire destinée à recevoir un joint d'étanchéité.

13. Dispositif d'entraînement selon l'une quelconque des revendications précédentes, **caractérisé en ce que** la charge propulsive est agencée dans une capsule (22) enfermée par la douille (24).

14. Dispositif d'entraînement selon la revendication 13, **caractérisé en ce que** le bord circonférentiel sur le fond de la capsule (22) est en appui sur une butée sur la face interne de la douille (24).

15. Dispositif d'entraînement selon l'une quelconque des revendications 1 à 12, **caractérisé en ce que** la charge propulsive (64) est insérée avec un allumeur (68) dans la douille (24) elle-même.

16. Dispositif d'entraînement selon la revendication 15, **caractérisé en ce que** la douille (24) et l'allumeur (68, 70) sont pourvus d'éléments à engagement de formes (72) pour fixer l'allumeur dans sa position dans la douille.

17. Dispositif d'entraînement selon la revendication 15 ou 16, **caractérisé en ce qu'**une préchambre est formée dans la douille (24) vis-à-vis de la charge propulsive (64), ladite préchambre présentant à son extrémité détournée de la charge propulsive une tuyère de sortie (30) hermétiquement fermée par une base d'éclatement (66).
